# EUROPÄISCHE PATENTSCHRIFT

(11) **EP 2 692 239 B1**
(45) Veröffentlichungstag und Bekanntmachung des Hinweises auf die Patenterteilung: **23.01.2019**
(21) Anmeldenummer: 13177366.5
(22) Anmeldetag: 22.07.2013
(51) Int. Cl.: A23G 1/20, A23G 1/00, A23G 3/34, A23G 3/02

(54) **Vorrichtung und Verfahren zum Herstellen von Schokoladenkernen**
Apparatus and Method for Producing Chocolate Cores
Dispositif et procédé de fabrication de coeurs de chocolat

(30) Priorität: 30.07.2012 DE 102012106903
(43) Veröffentlichungstag der Anmeldung: 05.02.2014
(73) Patentinhaber: CHOCOTECH GmbH, 38855 Wernigerode (DE)
(72) Erfinder: Hochapfel, Birk, 38855 Wernigerode (DE); Hilker, Erhard, 32657 Lemgo (DE)
(74) Vertreter: REHBERG HÜPPE + PARTNER

(56) Entgegenhaltungen:
- WO-A1-01/41583
- WO-A1-03/005832
- CH-A- 261 353
- DE-A1- 2 540 613
- DE-A1- 2 827 404
- DE-T2- 69 619 478
- US-A- 5 078 204
- US-A1- 2006 040 041

## Beschreibung

### TECHNISCHES GEBIET DER ERFINDUNG

Die Erfindung betrifft eine Vorrichtung und ein Verfahren zum Herstellen von Kernen aus einer fetthaltigen Süßwarenmasse.

Die Vorrichtung weist eine gekühlte Formvorrichtung zum Formen der Kerne auf. Die Formvorrichtung weist zwei gegenläufig angetriebene Formwalzen mit einer Vielzahl von Vertiefungen auf. Die flüssige Süßwarenmasse fließt dann während des Herstellungsverfahrens zum Ausbilden der Kerne in die Vertiefungen und erstarrt in diesen.

Derartige Vorrichtungen dienen zum Herstellen von massiven Kernen aus einer fetthaltigen Süßwarenmasse, insbesondere Schokolade. Bei diesen Kernen kann es sich um Linsen, Eier, Kugeln oder vergleichbare Formen handeln, die durch Vertiefungen in zusammenarbeitenden Formwalzen hergestellt werden können.

### STAND DER TECHNIK

Eine Vorrichtung und ein Verfahren zum Herstellen von Kernen aus einer fetthaltigen Süßwarenmasse sind aus dem deutschen Patent DE 696 19 478 T2 bekannt. Die Vorrichtung weist eine Extrusionsvorrichtung auf, in die halbfeste, nicht fließfähige Schokoladenknöpfe gegeben werden. Der dadurch erzeugte Schokoladenstrang wird einer Formvorrichtung mit zwei gegenläufig angetriebenen Formwalzen mit einer Vielzahl von Vertiefungen zugeführt. Die nicht-fließfähige Schokoladenmasse wird dann in der Formvorrichtung zu Kernen aus Schokolade umgeformt. Eine temperaturmäßige Behandlung der Schokoladenmasse erfolgt weder in der Extrusionsvorrichtung noch in der Formvorrichtung.

Aus der deutschen Patentanmeldung DE 28 27 404 sind eine Vorrichtung und ein Verfahren zur Herstellung riegel- oder stangenförmiger Süßwarenteile bekannt. Die Süßwarenmasse wird in ihrem flüssigen Zustand auf eine Kühlwalze mit einer glatten Mantelfläche gegeben, die rotierend antreibbar ausgebildet ist. Hierdurch wird ein Süßwarenfilm auf der Mantelfläche der Kühlwalze gebildet. Dieser Film wird von der Kühlwalze entfernt, auf ein Förderband gegeben und mittels des Förderbands als Strang bzw. Teppich abtransportiert. Anschließend kann der Strang bzw. Teppich einer Weiterbearbeitungsstation zugeführt und dort beispielsweise in Stränge oder sonstige Materialstücke unterteilt werden.

Eine Vorrichtung zum Herstellen von Schokoladenkernen ist allgemein im Stand der Technik bekannt.

Die Vorrichtung weist eine gekühlte Formvorrichtung zum Formen der Kerne auf. Die Formvorrichtung weist zwei gegenläufig angetriebene Formwalzen mit einer Vielzahl von Vertiefungen auf, in die die flüssige Schokoladenmasse zum Ausbilden der Kerne fließt. Die mittels einer stromaufwärts angeordneten Temperiermaschine temperierte flüssige Schokoladenmasse wird dabei in den Spalt zwischen den horizontal nebeneinander angeordneten Formwalzen gegossen. Die synchron und gegenläufig angetriebenen Formwalzen nehmen dann die flüssige Süßwarenmasse in den Vertiefungen auf. Eine solche Vorrichtung ist beispielsweise aus der US-5,078,204 bekannt.

Die Formwalzen werden sehr stark gekühlt, so dass die Oberflächentemperatur der Formwalzen weit unterhalb der Kristallisationstemperatur der Schokoladenmasse liegt. Dadurch erhöht sich die Viskosität der Schokoladenmasse sehr schnell und die Schokoladenmasse erstarrt während der fortgesetzten Rotation der Formwalzen. Ergebnis ist ein endloser Teppich mit einer dünnen Schicht und den den Vertiefungen der Formwalzen entsprechenden Kernen. Dieser Teppich wird dann mittels eines Förderbands abgefördert.

Bei diesem Verfahren besteht häufig das Problem, dass der Teppich an den Formwalzen haftet und somit nicht korrekt auf dem Förderband abgelegt wird. Eine andere Problematik besteht darin, dass die Temperaturabsenkung der Schokoladenmasse durch die Formwalzen nicht ausreicht, um die nötige Erstarrung der Schokoladenmasse zu erreichen. Dementsprechend sind die Kerne dann beim Ablegen auf dem Förderband noch nicht stabil genug, so dass es zu ungewünschten Verformungen der Kerne kommt. Um dieses Problem zu reduzieren, muss die Rotationsgeschwindigkeit der Formwalzen reduziert werden, wodurch sich dann allerdings ein verringerter Durchsatz der Vorrichtung ergibt.

### AUFGABE DER ERFINDUNG

Der Erfindung liegt die Aufgabe zugrunde, eine Vorrichtung und ein Verfahren zum Herstellen von Kernen aus einer fetthaltigen Süßwarenmasse bereitzustellen, mit denen der Durchsatz der Vorrichtung wesentlich erhöht wird, ohne die Produktqualität negativ zu beeinträchtigen.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Vorrichtung zum Herstellen von Kernen aus einer fetthaltigen Süßwarenmasse mit einer gekühlten Formvorrichtung zum Formen der Kerne. Die Formvorrichtung weist zwei gegenläufig angetriebene Formwalzen mit einer Vielzahl von Vertiefungen auf. Die flüssige Süßwarenmasse kann zum Ausbilden der Kerne in die Vertiefungen fließen. Weiterhin weist die Vorrichtung eine stromaufwärts der Formvorrichtung angeordnete separate Kühlvorrichtung mit einer Kühlwalze auf.

Die Erfindung betrifft weiterhin ein Verfahren zum Herstellen von Kernen aus einer fetthaltigen Süßwarenmasse unter Verwendung einer separaten Kühlvorrichtung. Die Kühlvorrichtung kann eine Kühlwalze aufweisen. Die Kühlvorrichtung kann aber auch anders ausgebildet sein. Beispielsweise kann sie eine Vorrichtung zum Blasen gekühlter Luft auf die Süßwarenmasse aufweisen. Die Kühlvorrichtung dient zum Kühlen der flüssigen temperierten Süßwarenmasse im Sinne des Absenkens der Temperatur der Süßwarenmasse um zwischen etwa 0,2 und 10 °C innerhalb einer Zeitspanne von weniger als 20 s.

Die Erfindung betrifft weiterhin die Verwendung einer eine Kühlwalze aufweisenden Kühlvorrichtung in einer Vorrichtung zum Herstellen von Kernen aus einer fetthaltigen Süßwarenmasse. Die Vorrichtung weist eine gekühlte Formvorrichtung zum Formen der Kerne auf, wobei die Formvorrichtung zwei gegenläufig angetriebene Formwalzen mit einer Vielzahl von Vertiefungen aufweist, in die die flüssige Süßwarenmasse zum Ausbilden der Kerne fließen kann. Die Kühlvorrichtung wird stromaufwärts der Formvorrichtung angeordnet.

### Definitionen

**Fetthaltige Süßwarenmasse:** Unter einer fetthaltigen Süßwarenmasse wird in dieser Anmeldung eine Schokoladenmasse oder eine andere Kakaobutter und/oder andere Fette enthaltende Süßwarenmasse verstanden.

**Flüssige Süßwarenmasse:** Unter einer flüssigen Süßwarenmasse wird in dieser Anmeldung eine erwärmte Süßwarenmasse verstanden, die eine pumpfähige Konsistenz besitzt.

**Kerne aus Süßwarenmasse:** Unter Kernen aus Süßwarenmasse werden in dieser Anmeldung Linsen, Eier, Kugeln oder vergleichbare Formen verstanden, die durch Prägen mit zwei zusammenarbeitenden Formwalzen hergestellt werden können. Die Formwalzen weisen dabei Vertiefungen auf, in die die Süßwarenmasse fließt und sich dort gestaltgebend verfestigt. Der Kern wird also durch die Kombination der beiden eine Form bildenden Vertiefungen der beiden Formwalzen gebildet.

### Weitere Beschreibung

Durch die neue Vorrichtung und das neue Verfahren wird also die bisher nur durch die gekühlte Formvorrichtung mit den Formwalzen erbrachte erforderliche Kühlleistung teilweise auf eine stromaufwärts angeordnete separate Kühlvorrichtung übertragen. Diese separate Kühlvorrichtung weist insbesondere eine Kühlwalze auf, die insbesondere eine glatte Mantelfläche aufweist und rotierend angetrieben ist.

Die Süßwarenmasse wird in erwärmter und somit flüssiger pumpbarer Form auf die Kühlwalze aufgebracht, nachdem sie zuvor temperaturmäßig behandelt wurde. Diese temperaturmäßige Behandlung hat vorzugsweise in einer Temperiermaschine stattgefunden. Eine Temperiermaschine dient bekanntlich insbesondere zum kontinuierlichen Aufbereiten von zu verarbeitenden fetthaltigen Massen, insbesondere Schokoladenmasse, durch Wärmebehandlung. Die Süßwarenmasse kann Kakaobutter und/oder andere Fettmassen enthalten. Eine solche Masse wird üblicherweise aufgeschmolzen oder jedenfalls erwärmt. Sie liegt dann in flüssigem pumpbaren Zustand vor und ist im Wesentlichen kristallfrei. Die Masse wird dann in der Temperiermaschine temperiert sowie anschließend einer Weiterverarbeitung zugeführt. Die Süßwarenmasse wird dafür insbesondere über Rohrleitungen in den Bereich der nachgeschalteten Kühlvorrichtung gepumpt.

Die Süßwarenmasse wird vorzugsweise kontinuierlich und gegebenenfalls in geregelter Weise der rotierend angetriebenen Kühlwalze zugeführt. Die Zuführung erfolgt dabei zweckmäßigerweise im oberen Bereich der horizontal angeordneten Kühlwalze. Die Süßwarenmasse verteilt sich dann auf der Mantelfläche der Kühlwalze und wird mit dieser als dünner Film in Rotationsrichtung weitergefördert. Während des Kontakts zwischen der Süßwarenmasse und der Kühlwalze wird der Süßwarenmasse durch die gekühlte Kühlwalze Wärmeenergie entzogen, so dass der gewünschte Teilkühlungseffekt der Süßwarenmasse erreicht wird. Somit muss die stromabwärts angeordnete gekühlte Formvorrichtung nicht mehr die gesamte Kühlleistung, sondern nur einen Teil der insgesamt zu erbringenden Kühlleistung bereitstellen.

Die Kühlung der Süßwarenmasse auf der Kühlwalze erfolgt vorzugsweise so schnell, dass sich an der Kontaktfläche zwischen Kühlwalze und Süßwarenmasse spontan keine neuen Fettkristalle bilden. Der Temperiergrad der Süßwarenmasse wird also gegenüber dem von der Temperiermaschine vorgegebenen Temperiergrad nicht oder nur unwesentlich verändert. Die Kühldauer in der Kühlvorrichtung ist also vergleichsweise kurz und liegt insbesondere in einem Bereich von weniger als 20 s, insbesondere weniger als 10 s, insbesondere weniger als 5 s, insbesondere zwischen etwa 1,5 und 3 s, insbesondere bei etwa 1,5 bis 2 s, insbesondere bei etwa 1,8 s und insbesondere bei etwa 1,75 s. Die in der Kühlvorrichtung durch Kühlung erzielte Temperaturdifferenz der Süßwarenmasse liegt zwischen etwa 0,2 und 10 °C, insbesondere zwischen etwa 0,5 und 5 °C, insbesondere zwischen etwa 0,5 und 2,5 °C, insbesondere bei etwa 1 °C.

Es wird dabei der physikalische Effekt ausgenutzt, dass aus der beschleunigten Abkühlung der fetthaltigen Süßwarenmasse eine verzögerte Ausbildung von Kristallstrukturen resultiert. Die endgültige Struktur einer fetthaltigen Süßwarenmasse, insbesondere einer Schokoladenmasse, ist vergleichsweise fest und kaum elastisch-plastisch verformbar. Wenn aber durch eine vergleichsweise niedrigere Temperatur eine schnelle Abkühlung der fetthaltigen Süßwarenmasse erreicht wird - wie dies mit der neuen Kühlwalze der Fall ist - kommt es zu einer starken Erhöhung der Viskosität der Süßwarenmasse, ohne dass sich bereits stabile Kristallstrukturen bilden. Dadurch ist die Produktmasse in diesem Zustand elastisch-plastisch verformbar. Erst in einem der Kühlvorrichtung und der Formvorrichtung nachgeordneten Station werden dann die endgültigen festen Kristallstrukturen in dem Süßwarenprodukt erreicht. Bei dieser Station handelt es sich insbesondere um einen Kühltunnel.

Das prägende Tieftemperaturformverfahren zur Herstellung von Kernen nutzt also die Besonderheiten von fetthaltigen Süßwarenmassen aus, dass sich ihre Fließeigenschaften schneller als ihre Kristallstruktur ändern. Die Viskosität und die Fließgrenze ändern sich proportional zur Temperatur. Die Kristallisation der fetthaltigen Süßwarenmasse hingegen ist von der Temperatur und der Zeit abhängig. Wenn also die fetthaltige Süßwarenmasse in der gekühlten Formvorrichtung in einer vergleichsweise kurzen Zeitspanne von einigen wenigen Sekunden von der Ausgangstemperatur von z. B. etwa 30 bis 31,5 °C auf etwa 5 °C abgekühlt wird, steigt die Viskosität der Masse an, während die Temperatur der Masse sinkt. Die Fettkristalle in der flüssigen Süßwarenmasse bilden sich aber sehr viel langsamer aus.

Bei der erfindungsgemäßen schnellen Abkühlung erfolgt die Kristallisation erst nach einer vergleichsweise langen Zeitspanne, beispielsweise nach etwa 12 min. Je nach Prozessbedingungen kann diese Zeitspanne auch bis zu 30 min oder mehr betragen.

Die zu verarbeitenden fetthaltigen Süßwarenmassen sind oftmals Gemische aus Fett, Zucker, Kakaobestandteilen und/oder Milchpulver. Die Fettanteile haben sehr gute Kriecheigenschaften, wenn die Masse noch warm ist. Beim Kontakt der fetthaltigen Süßwarenmasse mit der gekühlten Oberfläche der Formwalzen der Formvorrichtung fließt das flüssige Fett in die mikroskopisch kleinen Unebenheiten in der Oberfläche der Vertiefungen der Formwalzen. Hierdurch erfolgt im Stand der Technik ein Anhaften der Süßwarenmasse an den Formwalzen. Durch die Erhöhung der Viskosität der Süßwarenmasse durch die definierte Kühlung vor dem Einbringen in die Vertiefungen der Formwalzen kann dieser Effekt nun erfindungsgemäß verringert werden. Die Erfindung führt also dazu, dass die Fließeigenschaften der fetthaltigen Süßwarenmasse durch die vorangeschaltete Kühlung erhöht werden, ohne den Kristallisationsgrad der Süßwarenmasse negativ zu beeinflussen.

Je nach der in der Süßwarenmasse verwendeten Fettart wird eine bestimmte geeignete Temperatur eingestellt, mit der die flüssige Süßwarenmasse in die Vertiefungen der Formwalzen der Formvorrichtung eingebracht wird. Diese Temperatur ist im Vergleich zum Stand der Technik niedriger und wurde durch eine schnelle Ankühlung erreicht, wie dies oberhalb beschrieben wurde. Es versteht sich, dass die jeweiligen Werte in Abhängigkeit von der vorhandenen Fettart gewählt werden. Bei einer dunklen Compoundmasse mit Palmkernfett, Zucker und Kakaomasse liegt diese Temperatur beispielsweise bei etwa 31,5 °C. Bei einer dunklen Überzugskuvertüre liegt diese Temperatur bei etwa 29,5 °C.

Grundsätzlich denkbar wäre auch die Vorkühlung der fetthaltigen Süßwarenmasse mit einer anderen Kühlvorrichtung, einem Röhrenwärmetauscher oder der vorangeschalteten Temperiermaschine selbst. Eine solche Vorkühlung führt aber zu unerwünschten Nebeneffekten. Dies liegt daran, dass die Zeitspanne, innerhalb derer die gewünschte Temperatursenkung erfolgt, zu groß ist. Dadurch bilden sich dann bereits Kristalle und die Süßwarenmasse lässt sich nicht mehr in der gewünschten Weise verformen. Zudem verstopfen die die verschiedenen Maschinenteile der Anlage verbindenden Rohrleitungen.

Durch das neue Verfahren und die neue Vorrichtung werden in der Praxis überragende Vorteile im Vergleich zum Stand der Technik erreicht. Bei praktischen Versuchen wurde eine Verdoppelung der Prägegeschwindigkeit und somit des Durchsatzes der Vorrichtung im Vergleich zum Stand der Technik erreicht. Mit der neuen Vorrichtung wurden in Praxistests Prägegeschwindigkeiten von mindestens etwa 6 m/min und sogar etwa 7,5 m/min erzielt. Im Stand der Technik liegt der vergleichbare Wert bei etwa 2,6 m/min. Es kommt mit der Erfindung zu weniger Produktionsausfällen.

Eine weitere Möglichkeit besteht darin, die erhöhte Effizienz des Verfahrens dazu zu nutzen, die Formwalzen im Vergleich zum Stand der Technik kleiner auszubilden und somit die Werkzeugkosten und Herstellungskosten zu reduzieren. Mit diesen kleineren Formwalzen kann dann aufgrund der vorgezogenen Teilkühlung mit der neuen separaten Kühlvorrichtung der gleiche Durchsatz oder-je nach Größenverhältnis - auch noch ein höherer Durchsatz im Vergleich zum Stand der Technik erreicht werden.

Die Drehzahl der Kühlwalze ist einstellbar bzw. regelbar, so dass eine optimale Schichtdicke des Süßwarenfilms auf der Mantelfläche der Kühlwalze erreicht wird. Die Drehzahl der Kühlwalze kann beispielsweise bei einem Durchmesser von zwischen etwa 700 bis 900 mm, insbesondere zwischen etwa 800 und 850 mm, bevorzugt etwa 833 mm, etwa 1 bis 2 U/min, insbesondere etwa 1,5 U/min, betragen. Die Dicke des Süßwarenfilms kann beispielsweise zwischen etwa 1 bis 5 mm, vorzugsweise zwischen etwa 2 bis 3 mm, betragen.

Die Kühlvorrichtung kann eine Filmbildungsvorrichtung aufweisen, die zum Ausbilden eines flüssigen Süßwarenfilms auf der Mantelfläche der Kühlwalze dient. Über diese Filmbildungsvorrichtung ist dann die Dicke des Süßwarenfilms vorzugsweise einstellbar. Die Ausbildung des Süßwarenfilms auf der Mantelfläche kann dann also sowohl durch die Filmbildungsvorrichtung als auch die Drehzahl der Kühlwalze individuell eingestellt werden. Beide Parameter lassen sich dann sowohl auf die gewählte Süßwarenmasse als auch das zu fertigende Endprodukt anpassen.

Die einstellbare Filmbildungsvorrichtung kann eine exzentrisch gelagerte Filmbildungswalze aufweisen. Die Filmbildungswalze weist dann selbst eine zylindrische Form auf, ist aber so exzentrisch gelagert, dass sie in unterschiedlichen Abständen zur Mantelfläche der Kühlwalze festgesetzt werden kann. Wenn eine andere Dicke des Süßwarenfilms eingestellt werden soll, wird das Befestigungsmittel der Filmbildungsvorrichtung gelöst, der Abstand zur Mantelfläche neu eingestellt und das Befestigungsmittel anschließend wieder angezogen. Die Filmbildungsvorrichtung ist dabei insbesondere in etwa oberhalb des oberen Endes der horizontal ausgerichteten Kühlwalze angeordnet. Vorzugsweise ist sie in Rotationsrichtung der Kühlwalze leicht versetzt angeordnet.

Die Kühlvorrichtung kann eine Abstreifvorrichtung aufweisen, die zum Abstreifen des flüssigen Süßwarenfilms von der Mantelfläche der Kühlwalze und zum Einbringen der gekühlten flüssigen Süßwarenmasse in die Formvorrichtung ausgebildet ist. Diese Abstreifvorrichtung ist vorzugsweise im unteren Bereich der horizontal gelagerten Kühlwalze angeordnet. In diesem Bereich kann der flüssige Süßwarenfilm besonders einfach von der Mantelfläche abgestreift werden und dann unter Schwerkrafteinfluss abgeführt und der Formvorrichtung zugeführt werden. Die Breite der Kühlwalze korrespondiert vorzugsweise mit der Breite der Formwalzen, so dass eine gleichmäßige Aufbringung der vorgekühlten Süßwarenmasse auf die Formwalzen einfach möglich ist.

Die Kühlwalze kann einen Doppelmantel für den Durchfluss eines Kühlmediums, insbesondere Kühlwasser, aufweisen. Es ist aber durchaus möglich, andere geeignete Kühlmedien, z. B. gekühlte Luft, zu verwenden. Die Temperatur des Kühlmediums ist an die Massentemperatur so anpassbar, dass die Temperaturdifferenz so groß ist, wie dies wie zum Erreichen der gewünschten Kühlung notwendig ist. Damit wird gemeinsam mit der geringen Verweilzeit verhindert, dass sich spontan neue Fettkristalle bilden. Die Temperatur des Kühlmediums liegt dabei insbesondere zwischen etwa 20 und 30°C, vorzugsweise aber immer höher als etwa 18°C. Das Kühlmedium strömt also durch den Doppelmantel der Kühlwalze und kühlt dabei den auf der Mantelfläche der Kühlwalze aufgenommenen Süßwarenfilm in der gewünschten Weise. Durch die Einstellung der Temperatur des Kühlmittels in Kombination mit der Fördergeschwindigkeit des Kühlmittels kann dabei die gewünschte Kühlwirkung eingestellt werden.

Die Temperatur der Süßwarenmasse kann dann im Schritt des Kühlens der Kerne durch Kühlen der Formwalzen um zwischen etwa 20 bis 28 °C, insbesondere um etwa 25 °C, gesenkt werden. Es handelt sich aufgrund der erfolgten Vorkühlung um eine im Vergleich zum Stand der Technik geringere Temperaturdifferenz. Die Kühlung erfolgt ebenfalls mittels eines Kühlmediums, insbesondere Kühlwasser. Das Kühlwasser weist dabei insbesondere einen derart hohen Anteil an Frostschutzmittel auf, dass es im flüssigen Zustand eine Temperatur von weit unter 0 °C - beispielsweise von -20 °C oder weniger - aufweisen kann.

In der folgenden Tabelle sind beispielhafte bevorzugte Werte für das Herstellen von Kernen aus dunkler Schokoladenmasse genannt. Die Schokoladenmasse wurde dabei zuvor mittels einer Scheibentemperiermaschine temperiert.

| **Größe** | **Wert** |
|---|---|
| Massetemperatur am Eingang der Kühlvorrichtung | 30,5-31 °C |
| Massetemperatur am Ausgang der Kühlvorrichtung | 28-30 °C |
| Verweildauer der Masse in der Kühlvorrichtung | 1,5-3 s |
| Temperatur des Kühlmediums am Eingang der Kühlvorrichtung | 25-29 °C |
| Temperatur des Kühlmediums am Ausgang der Kühlvorrichtung | 26-30 °C |
| Massetemperatur am Eingang der Formvorrichtung | 28,5 °C |
| Massetemperatur am Ausgang der Formvorrichtung | 5 °C |
| Temperatur des Kühlmediums am Eingang der Formvorrichtung | -25 °C |
| Temperatur des Kühlmediums am Ausgang der Formvorrichtung | -23 °C |

Es versteht sich, dass bei anderen Süßwarenmassen an die jeweilige Süßwarenmasse angepasste Werte Verwendung finden bzw. vorliegen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Kühlwalze die Rede ist, ist dies so zu verstehen, dass genau eine Kühlwalze, zwei Kühlwalzen oder mehr Kühlwalzen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein vereinfachtes Schaubild einer beispielhaften Ausführungsform einer neuen Vorrichtung zum Herstellen von Kernen aus einer fetthaltigen Süßwarenmasse.
- **Fig. 2**: zeigt eine perspektivische Ansicht einer beispielhaften Ausführungsform einer neuen Kühlvorrichtung mit einer Kühlwalze.
- **Fig. 3**: zeigt eine teilweise geschnittene Ansicht der Kühlvorrichtung gemäß Fig. 2.
- **Fig. 4**: zeigt eine vereinfachte Darstellung des Flusses des Kühlmediums durch die Kühlwalze gemäß Fig. 2 und 3.

### FIGURENBESCHREIBUNG

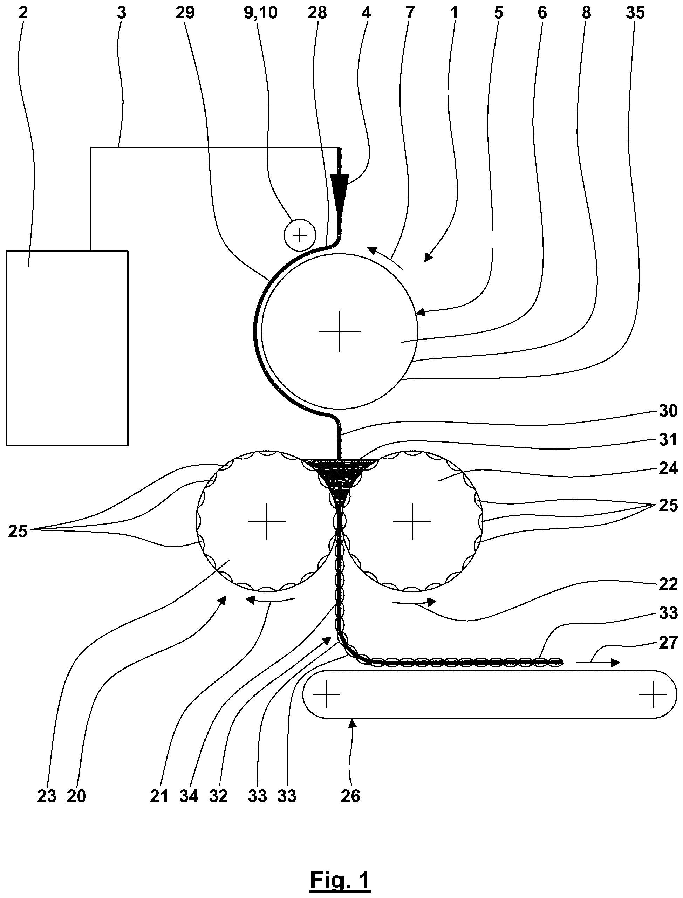

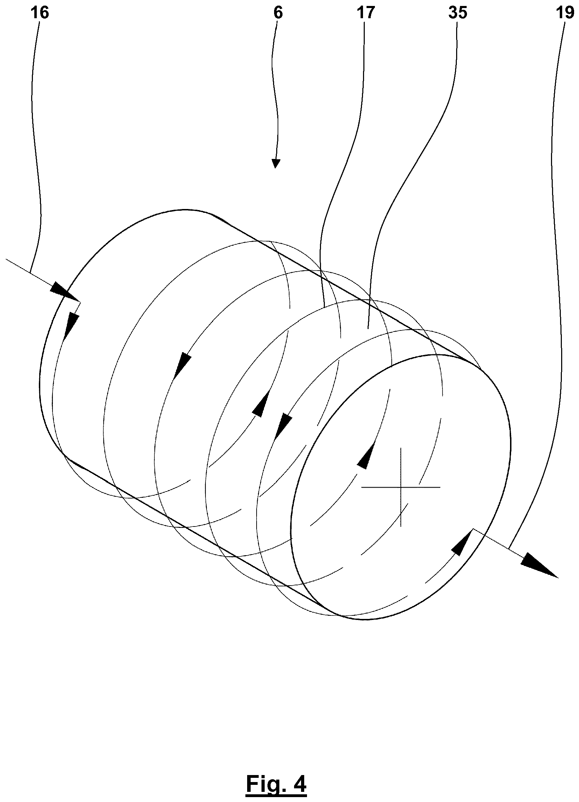

**Fig. 1 bis 4** zeigen verschiedene Bestandteile und Ansichten einer neuen Vorrichtung 1 zum Herstellen von Kernen 33 aus einer fetthaltigen Süßwarenmasse.

Die fetthaltige Süßwarenmasse wird in einer der Vorrichtung 1 vorangeschalteten Temperiermaschine 2 temperaturmäßig behandelt, wie dies allgemein im Stand der Technik bekannt ist. Es handelt sich insbesondere um eine Schokoladenmasse. Über eine Leitung 3 wird die temperierte und somit fließfähige Süßwarenmasse 28 dann gemäß Pfeil 4 der Vorrichtung 1 durch eine nicht dargestellte Pumpe zugeführt.

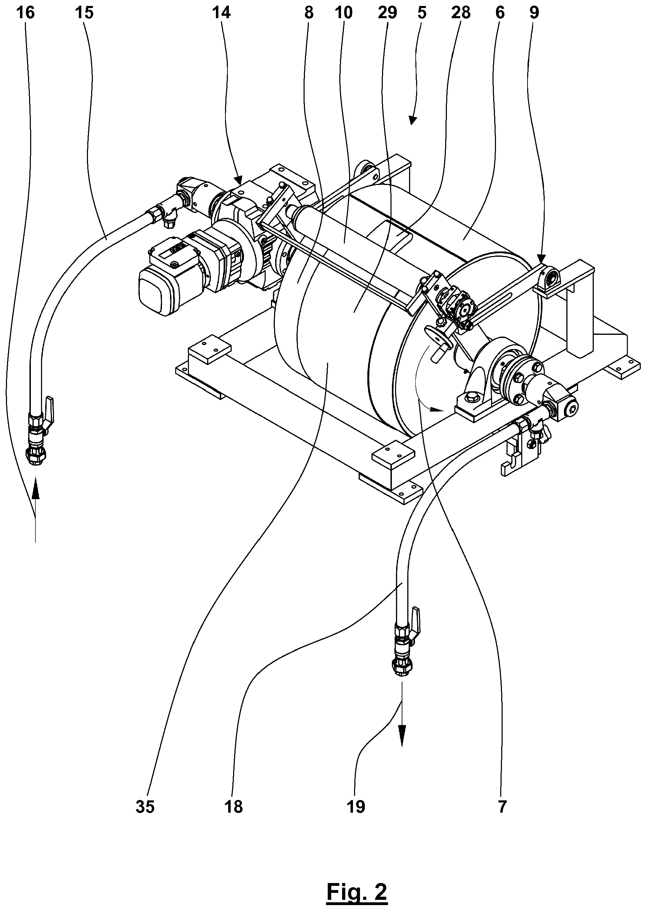

Die Vorrichtung 1 weist erfindungsgemäß eine Kühlvorrichtung 5 mit einer Kühlwalze 6 auf. Sie könnte aber auch eine andere Einrichtung zum Kühlen aufweisen. Die Kühlwalze 6 ist mittels eines Antriebs 14 (siehe Fig. 2) gemäß Pfeil 7 rotierend angetrieben und weist eine glatte Mantelfläche 8 auf. Die Mantelfläche 8 könnte auch nicht-glatt ausgebildet sein, dient jedoch nicht zur Bestimmung der Geometrie der herzustellenden Kerne 33.

Die Kühlvorrichtung 5 weist weiterhin eine Filmbildungsvorrichtung 9 auf. Im dargestellten Beispiel ist die Filmbildungsvorrichtung 9 einstellbar ausgebildet und weist hierfür eine exzentrisch gelagerte Filmbildungswalze 10 und zugeordnete Verstelleinrichtungen auf.

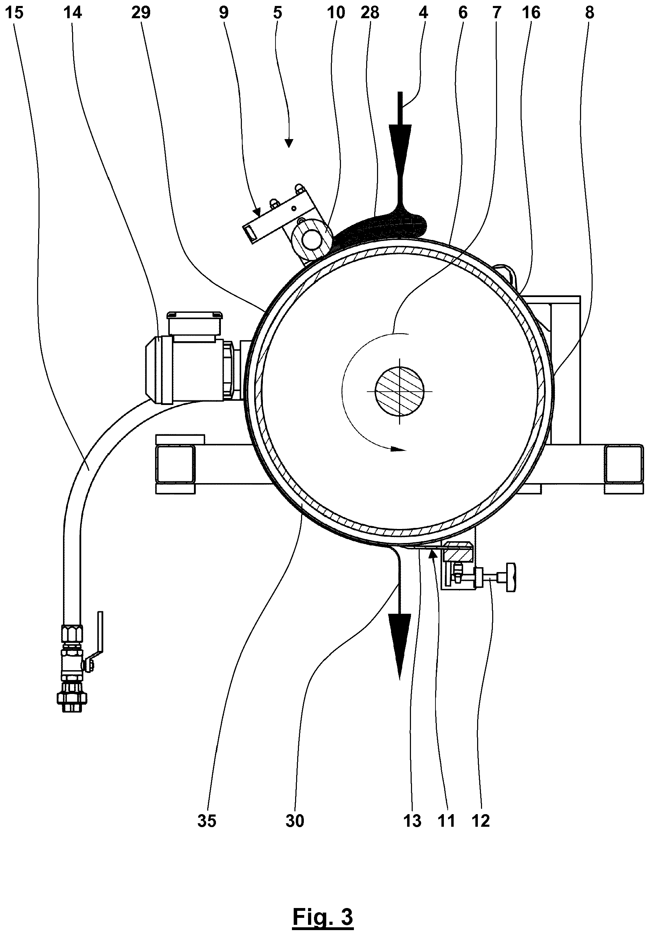

Im unteren Bereich der Kühlvorrichtung 5 ist eine Abstreifvorrichtung 11 angeordnet (siehe Fig. 3). Die Abstreifvorrichtung 11 weist einen einstellbaren Halter 12 sowie ein Messer 13 auf, welches relativ zu der Mantelfläche 8 der Kühlwalze 6 so eingestellt wird, dass die gewünschte Abnahme der Süßwarenmasse erreicht wird.

Die Kühlvorrichtung 5 weist weiterhin eine Zuführleitung 15 für die Zuführung eines Kühlmediums, insbesondere Kühlwasser, auf. Das Kühlmedium wird mittels einer nicht dargestellten Pumpe in Richtung des Pfeils 16 durch die Zuführleitung 15 und durch den Antrieb 14 hindurch in den Bereich der Kühlvorrichtung 5 geführt. Die Kühlvorrichtung 5 weist einen Doppelmantel 35 auf, in dem sich die spiralförmig ausgebildete Kühlleitung 17 erstreckt. Das Kühlmedium fließt dann also durch die Kühlleitung 17 im Doppelmantel 35 und kühlt somit die Mantelfläche 8 der Kühlwalze 6. Am Ende der Kühlwalze 6 tritt das erwärmte Kühlmedium dann durch eine Abführleitung 18 gemäß Pfeil 19 aus der Kühlvorrichtung 5 aus.

Unterhalb und stromabwärts der Kühlvorrichtung 5 ist eine gekühlte Formvorrichtung 20 angeordnet. Die Formvorrichtung 20 weist zwei gegenläufig gemäß Pfeil 21 bzw. Pfeil 22 angetriebene Formwalzen 23, 24 auf. Jede der Formwalzen 23, 24 weist eine Vielzahl von Vertiefungen 25 auf, in die die flüssige Süßwarenmasse zum Ausbilden der Kerne 33 fließen kann. Die Vertiefungen 25 sind hier nur symbolisch dargestellt. Es versteht sich, dass sich derartige beabstandete Vertiefungen 25 im Wesentlichen über die gesamte Mantelfläche der Formwalzen 23, 24 erstrecken und unterschiedliche Geometrien besitzen können, wie dies bereits im Stand der Technik bekannt ist. Die Formvorrichtung 20 weist auch eine Kühlvorrichtung zum Kühlen der Mantelfläche der Formwalzen 23, 24 und somit der in den Vertiefungen 25 aufgenommenen Süßwarenmasse auf. Auf eine weitere Beschreibung dieser Kühlvorrichtung wird verzichtet, da sie aus dem Stand der Technik bekannt ist.

Unterhalb und stromabwärts der Formvorrichtung 20 ist ein Förderband 26 angeordnet, welches gemäß Pfeil 27 angetrieben wird.

Das neue Verfahren zum Herstellen von Kernen 33 aus einer fetthaltigen Süßwarenmasse, insbesondere Schokoladenmasse, läuft nun wie folgt ab:
In der Temperiermaschine 2 wird die Süßwarenmasse 28 in der erforderlichen Weise temperaturmäßig behandelt und mittels einer Pumpe (nicht dargestellt) durch die Leitung 3 gemäß Pfeil 4 der Kühlvorrichtung 5 zugeführt.

Die flüssige Süßwarenmasse 28 strömt dabei auf die Mantelfläche 8 der Kühlwalze 6 und wird gemäß Pfeil 7 von dieser mitgenommen. Die Filmbildungsvorrichtung 9 definiert dabei den Spalt und dadurch die maximale Schichtdicke und verteilt die flüssige Süßwarenmasse 28 auf der Mantelfläche 8 der Kühlwalze 6 zum Ausbilden eines flüssigen Süßwarenmassenfilms 29. Der Süßwarenmassenfilm 29 wird durch das Kühlen der Kühlwalze 6 während seines Weitertransports gemäß Pfeil 7 gekühlt und an einer geeigneten Stelle - hier am unteren Ende der Kühlwalze 6 - mittels der Abstreifvorrichtung 11 von der Mantelfläche 8 abgenommen.

Die gekühlte und weiterhin flüssige Süßwarenmasse 30 wird dann in die stromabwärts angeordnete separate Formvorrichtung 20 eingebracht. Die gekühlte Süßwarenmasse 30 wird so in den Bereich zwischen den Formwalzen 23, 24 gegeben, dass die Vertiefungen 25 der Formwalzen 23, 24 vollständig mit gekühlter Süßwarenmasse 30 gefüllt werden. Um dies zu gewährleisten, kann die gekühlte Süßwarenmasse 30 zur Bildung eines Süßwarenmassenreservoirs 31 zwischen die Formwalzen 23, 24 eingebracht werden. Die gekühlte Süßwarenmasse 30 füllt dann also sowohl die Vertiefungen 25 als auch den Spalt zwischen den Formwalzen 23, 24 aus und verfestigt sich aufgrund der Kühlung der Formwalzen 23, 24 in dieser Form. Am unteren Ende der Formwalzen 23, 24 tritt dann also ein endloser Süßwarenteppich 32 mit den Kernen 33 und einer diese verbindenden dünnen Schicht 34 aus. Das Entfernen des zumindest teilweise erstarrten Süßwarenteppichs 32 und somit der Kerne 33 erfolgt dabei automatisch aufgrund der Schwerkraft, aufgrund der sich öffnenden, aus den Vertiefungen 25 gebildeten Formen und aufgrund der Abförderung mittels des Förderbands 26.

Anschließend wird der Süßwarenteppich 32 einer weiteren Verarbeitung zugeführt, insbesondere um die gewünschten Kristalle auszubilden und die Kerne 33 von der dünnen Schicht 34 zu befreien.

### BEZUGSZEICHENLISTE

- 1: Vorrichtung
- 2: Temperiermaschine
- 3: Leitung
- 4: Pfeil
- 5: Kühlvorrichtung
- 6: Kühlwalze
- 7: Pfeil
- 8: Mantelfläche
- 9: Filmbildungsvorrichtung
- 10: Filmbildungswalze
- 11: Abstreifvorrichtung
- 12: Halter
- 13: Messer
- 14: Antrieb
- 15: Zuführleitung
- 16: Pfeil
- 17: Kühlleitung
- 18: Abführleitung
- 19: Pfeil
- 20: Formvorrichtung
- 21: Pfeil
- 22: Pfeil
- 23: Formwalze
- 24: Formwalze
- 25: Vertiefung
- 26: Förderband
- 27: Pfeil
- 28: Süßwarenmasse
- 29: Süßwarenmassenfilm
- 30: gekühlte Süßwarenmasse
- 31: Süßwarenmassenreservoir
- 32: Süßwarenteppich
- 33: Kern
- 34: Schicht
- 35: Doppelmantel

## Patentansprüche

1. Vorrichtung (1) zum Herstellen von Kernen (33) aus einer fetthaltigen Süßwarenmasse, mit
einer gekühlten Formvorrichtung (20) zum Formen der Kerne (33), wobei die Formvorrichtung (20) zwei gegenläufig angetriebene Formwalzen (23, 24) mit einer Vielzahl von Vertiefungen (25) aufweist, in die die flüssige Süßwarenmasse zum Ausbilden der Kerne (33) fließen und sich dort gestaltgebend verfestigen kann, **gekennzeichnet durch** eine stromaufwärts der Formvorrichtung (20) angeordnete separate Kühlvorrichtung (5) mit einer Kühlwalze (6).

2. Vorrichtung (1) nach Anspruch 1, **dadurch gekennzeichnet, dass** die Kühlwalze (6) eine glatte Mantelfläche (8) aufweist und rotierend antreibbar ausgebildet ist.

3. Vorrichtung (1) nach mindestens einem der vorhergehenden Ansprüche, **dadurch gekennzeichnet, dass** die Kühlvorrichtung (5) eine Filmbildungsvorrichtung (9) aufweist, die zum Ausbilden eines flüssigen Süßwarenmassenfilms (29) auf der Mantelfläche (8) der Kühlwalze (6) dient.

4. Vorrichtung (1) nach Anspruch 3, **dadurch gekennzeichnet, dass** die Filmbildungsvorrichtung (9) zur Festlegung der Dicke des Süßwarenmassenfilms (29) einstellbar ausgebildet ist.

5. Vorrichtung (1) nach Anspruch 4, **dadurch gekennzeichnet, dass** die einstellbare Filmbildungsvorrichtung (9) eine exzentrisch gelagerte Filmbildungswalze (10) aufweist.

6. Vorrichtung (1) nach mindestens einem der vorhergehenden Ansprüche, **dadurch gekennzeichnet, dass** die Kühlvorrichtung (5) eine Abstreifvorrichtung (11) aufweist, die zum Abstreifen des flüssigen Süßwarenmassenfilms (29) von der Mantelfläche (8) der Kühlwalze (6) und zum Einbringen der gekühlten flüssigen Süßwarenmasse (30) in die Formvorrichtung (20) ausgebildet ist.

7. Vorrichtung (1) nach mindestens einem der vorhergehenden Ansprüche, **dadurch gekennzeichnet, dass** die Kühlwalze (6) einen Doppelmantel (35) für den Durchfluss eines Kühlmediums, insbesondere Kühlwasser, aufweist.

8. Verfahren zum Herstellen von Kernen (33) aus einerfetthaltigen Süßwarenmasse, mit den Schritten
Kühlen der flüssigen temperierten Süßwarenmasse in einer Kühlvorrichtung (5) zum Absenken der Temperatur der Süßwarenmasse um zwischen etwa 0,2 und 10 °C innerhalb einer Zeitspanne von weniger als 20 s,
Einbringen derflüssigen gekühlten Süßwaremasse in eine separate Formvorrichtung (20), die zwei gegenläufig angetriebene Formwalzen (23, 24) mit einer Vielzahl von Vertiefungen (25) aufweist, wobei die gekühlte flüssige Süßwaremasse zum Ausbilden der Kerne (33) in die Vertiefungen (25) fließt und sich dort gestaltgebend verfestigt,
Kühlen der Kerne (33) durch Kühlen der Formwalzen (23, 24), und
Entfernen der zumindest teilweise erstarrten Kerne (33) aus den Vertiefungen (25) der Formwalzen (23, 24).

9. Verfahren nach Anspruch 8, **dadurch gekennzeichnet, dass** die Temperatur der flüssigen Süßwarenmasse im Schritt des Kühlens in der Kühlvorrichtung (5) um zwischen etwa 0,5 und 2,5 °C, insbesondere um etwa 1 °C, gesenkt wird.

10. Verfahren nach Anspruch 8 oder 9, **dadurch gekennzeichnet, dass** die Temperatur der flüssigen Süßwarenmasse im Schritt des Kühlens in der Kühlvorrichtung (5) innerhalb einer Zeitspanne von weniger als 10 s, insbesondere von zwischen etwa 1,5 und 3 s, gesenkt wird.

11. Verfahren nach mindestens einem der vorhergehenden Ansprüche 8 bis 10, **dadurch gekennzeichnet, dass** die Temperatur der Süßwarenmasse im Schritt des Kühlens der Kerne (33) durch Kühlen der Formwalzen (23, 24) um mehr als 10 °C, insbesondere zwischen etwa 20 und 28 °C, insbesondere um etwa 25 °C, gesenkt wird.

12. Verfahren nach mindestens einem der vorhergehenden Ansprüche 8 bis 11, wobei die Kühlvorrichtung (5) eine Kühlwalze (6) aufweist, mit den Schritten
Aufbringen der flüssigen Süßwarenmasse (28) auf die Mantelfläche (8) der Kühlwalze (6) der Kühlvorrichtung (5),
Verteilen der flüssigen Süßwarenmasse (28) auf der Mantelfläche (8) der Kühlwalze (6) zum Ausbilden eines flüssigen Süßwarenmassenfilms (29) auf der Mantelfläche (8) der Kühlwalze (6),
Kühlen des Süßwarenmassenfilms (29) durch Kühlen der Kühlwalze (6), und
Abstreifen des flüssigen Süßwarenmassenfilms (29) von der Mantelfläche (8) der Kühlwalze (6).

13. Verwendung einer eine Kühlwalze (6) aufweisenden Kühlvorrichtung (5) in einer Vorrichtung (1) zum Herstellen von Kernen (33) aus einer fetthaltigen Süßwarenmasse, wobei
die Vorrichtung (1) eine gekühlte Formvorrichtung (20) zum Formen der Kerne (33) aufweist, wobei die Formvorrichtung (20) zwei gegenläufig angetriebene Formwalzen (23, 24) mit einer Vielzahl von Vertiefungen (25) aufweist, in die die flüssige Süßwarenmasse zum Ausbilden der Kerne (33) fließen und sich dort gestaltgebend verfestigen kann, und
die Kühlvorrichtung (5) stromaufwärts der Formvorrichtung (20) angeordnet wird.

14. Verwendung der Kühlvorrichtung (5) nach Anspruch 13, **dadurch gekennzeichnet, dass** die Vorrichtung (1) nach mindestens einem der Ansprüche 1 bis 7 ausgebildet und/oder zum Ausführen des Verfahrens nach mindestens einem der Ansprüche 8 bis 12 bestimmt ist.

## Claims

1. An apparatus (1) for producing cores (33) of a fat-containing confectionery mass, comprising
a cooled moulding apparatus (20) for moulding the cores (33), the moulding apparatus (20) including two moulding rollers (23, 24) being driven in opposite directions and including a multitude of impressions (25) into which the liquid confectionery mass can flow to form the cores (33) and to solidify there, **characterised by**
a separate cooling apparatus (5) including a cooling roller (6), the cooling apparatus (5) being arranged upstream of the moulding apparatus (20).

2. The apparatus (1) of claim 1, **characterised in that** the cooling roller (6) includes a smooth surface area (8) and is designed to be rotatingly driven.

3. The apparatus (1) of at least one of the preceding claims, **characterised in that** the cooling apparatus (5) includes a film producing apparatus (9) serving to form a liquid film of confectionery mass (29) on the surface area (8) of the cooling roller (6).

4. The apparatus (1) of claim 3, **characterised in that** the film producing apparatus (9) is designed to be adjustable to adjust the thickness of the film of confectionery mass (29).

5. The apparatus (1) of claim 4, **characterised in that** the adjustable film producing apparatus (9) includes an eccentrically supported film producing roller (10).

6. The apparatus (1) of at least one of the preceding claims, **characterised in that** the cooling apparatus (5) includes a stripper apparatus (11) being designed to remove the liquid film of confectionery mass (29) from the surface area (8) of the cooling roller (6) and to introduce the cooled liquid confectionery mass (30) into the moulding apparatus (20).

7. The apparatus (1) of at least one of the preceding claims, **characterised in that** the cooling roller (6) includes a double shell (35) for passage of a cooling medium, especially cooling water.

8. A method of producing cores (33) of a fat-containing confectionery mass, comprising the steps of
cooling the liquid tempered confectionery mass in a cooling apparatus (5) to lower the temperature of the confectionery mass by between approximately 0.2 and 10 °C within a period of time of less than 20 s,
introducing the liquid cooled confectionery mass into a separate moulding apparatus (20) including two moulding rollers (23, 24) being driven in opposite directions and including a multitude of impressions (25), the cooled liquid confectionery mass flowing into the impressions (25) to form the cores (33) and to solidify there,
cooling the cores (33) by cooling the moulding rollers (23, 24), and
removing the at least partly solidified cores (33) from the impressions (25) of the moulding rollers (23, 24).

9. The method of claim 8, **characterised in that**, in the step of cooling in the cooling apparatus (5), the temperature of the liquid confectionery mass is lowered by between approximately 0.5 and 2.5 °C, especially by approximately 1 °C.

10. The method of claim 8 or 9, **characterised in that**, in the step of cooling in the cooling apparatus (5), the temperature of the liquid confectionery mass is lowered within a period of time of less than 10 s, especially of between approximately 1.5 and 3 s.

11. The method of at least one of the preceding claims 8 to 10, **characterised in that**, in the step of cooling the cores (33) by cooling the moulding rollers (23, 24), the temperature of the confectionery mass is lowered by more than 10 °C, especially between approximately 20 and 28 °C, especially by approximately 25 °C.

12. The method of at least one of the preceding claims 8 to 11, wherein the cooling apparatus (5) includes a cooling roller (6), comprising the steps of
applying the liquid confectionery mass (28) onto the surface area (8) of the cooling roller (6) of the cooling apparatus (5),
distributing the liquid confectionery mass (28) on the surface area (8) of the cooling roller (6) to produce a liquid film of confectionery mass (29) on the surface area (8) of the cooling roller (6),
cooling the liquid film of confectionery mass (29) by cooling the cooling roller (6), and removing the liquid film of confectionery mass (29) from the surface area (8) of the cooling roller (6).

13. Use of a cooling apparatus (5) including a cooling roller (6) in an apparatus (1) for producing cores (33) of a fat-containing confectionery mass, wherein
the apparatus (1) includes a cooled moulding apparatus (20) for moulding the cores (33), the moulding apparatus (20) including two moulding rollers (23, 24) being driven in opposite directions and including a multitude of impressions (25) into which the liquid confectionery mass can flow to form the cores (33) and to solidify there, and
the cooling apparatus (5) is being arranged upstream of the moulding apparatus (20).

14. Use of the cooling apparatus (5) of claim 13, **characterised in that** the apparatus (1) is designed according to at least one of claims 1 to 7 and/or is destined for conducting the method of at least one of claims 8 to 12.

## Revendications

1. Dispositif (1) de fabrication de coeurs (33) à partir d'une masse de confiserie contenant des matières grasses, avec
un dispositif de mise en forme (20) refroidi destiné à la mise en forme des coeurs (33), le dispositif de mise en forme (20) comportant deux cylindres de mise en forme (23, 24) entraînés en sens inverse dotés d'une multiplicité de creux (25) dans lesquels la masse de confiserie liquide peut s'écouler pour la constitution des coeurs (33) et s'y solidifier en créant une forme, **caractérisé par**
un dispositif de refroidissement (5) séparé doté d'un cylindre de refroidissement (6) et disposé en amont du dispositif de mise en forme (20).

2. Dispositif (1) selon la revendication 1, **caractérisé en ce que** le cylindre de refroidissement (6) comporte une surface d'enveloppe (8) lisse et est constitué de façon à pouvoir être entraîné en rotation.

3. Dispositif (1) selon au moins l'une des revendications précédentes, **caractérisé en ce que** le dispositif de refroidissement (5) comporte un dispositif de formation de film (9) qui sert à la constitution d'un film de masse de confiserie (29) liquide sur la surface d'enveloppe (8) du cylindre de refroidissement (6).

4. Dispositif (1) selon la revendication 3, **caractérisé en ce que** le dispositif de formation de film (9) est constitué de façon réglable pour la spécification de l'épaisseur du film de masse de confiserie (29).

5. Dispositif (1) selon la revendication 4, **caractérisé en ce que** le dispositif de formation de film (9) réglable comporte un cylindre de formation de film (10) supporté de façon excentrée.

6. Dispositif (1) selon au moins l'une des revendications précédentes, **caractérisé en ce que** le dispositif de refroidissement (5) comporte un dispositif de raclage (11) qui est constitué pour le raclage du film de masse de confiserie (29) liquide à partir de la surface d'enveloppe (8) du cylindre de refroidissement (6) et pour l'introduction de la masse de confiserie (30) liquide refroidie dans le dispositif de mise en forme (20).

7. Dispositif (1) selon au moins l'une des revendications précédentes, **caractérisé en ce que** le cylindre de refroidissement (6) comporte une double enveloppe (35) pour le passage d'un agent de refroidissement, en particulier de l'eau de refroidissement.

8. Procédé de fabrication de coeurs (33) à partir d'une masse de confiserie contenant des matières grasses, avec les étapes suivantes:
refroidissement de la masse de confiserie liquide équilibrée en température dans un dispositif de refroidissement (5) pour abaisser la température de la masse de confiserie d'environ 0,2 à 10 °C à l'intérieur d'une période de temps inférieure à 20 s,
introduction de la masse de confiserie refroidie liquide dans un dispositif de mise en forme (20) séparé qui comporte deux cylindres de mise en forme (23, 24) entraînés en sens inverse dotés d'une multiplicité de creux (25), la masse de confiserie liquide refroidie s'écoulant dans les creux pour la constitution des coeurs (33) et s'y solidifiant en créant une forme,
refroidissement des coeurs (33) par refroidissement des cylindres de mise en forme (23, 24), et
enlèvement des coeurs (33) au moins partiellement figés hors des creux (25) des cylindres de mise en forme (23, 24).

9. Procédé selon la revendication 8, **caractérisé en ce que** la température de la masse de confiserie liquide est abaissée d'environ 0,5 à 2,5 °C, en particulier d'environ 1 °C, dans l'étape de refroidissement dans le dispositif de refroidissement (5).

10. Procédé selon la revendication 8 ou 9, **caractérisé en ce que,** dans l'étape de refroidissement dans le dispositif de refroidissement (5), la température de la masse de confiserie liquide est abaissée à l'intérieur d'une période temps inférieure à 10 s, en particulier comprise entre environ 1,5 et 3 s.

11. Procédé selon au moins l'une des revendications 8 à 10, **caractérisé en ce que,** dans l'étape de refroidissement des coeurs (33) par le refroidissement des cylindres de mise en forme (23, 24), la température de la masse de confiserie est abaissée de plus de 10 °C, en particulier d'environ 20 à 28 °C, en particulier d'environ 25 °C.

12. Procédé selon au moins l'une des revendications 8 à 11, **caractérisé en ce que** le dispositif de refroidissement (5) comporte un cylindre de refroidissement (6), avec les étapes suivantes:
application de la masse de confiserie (28) liquide sur la surface d'enveloppe (8) du cylindre de refroidissement (6) du dispositif de refroidissement (5),
répartition de la masse de confiserie (28) liquide sur la surface d'enveloppe (8) du cylindre de refroidissement (6) en vue de la constitution d'un film de masse de confiserie (29) liquide sur la surface d'enveloppe (8) du cylindre de refroidissement (6),
refroidissement du film de masse de confiserie (29) par refroidissement du cylindre de refroidissement (6), et
raclage du film de masse de confiserie (29) liquide à partir de la surface d'enveloppe (8) du cylindre de refroidissement (6).

13. Utilisation d'un dispositif de refroidissement (5) comportant un cylindre de refroidissement (6) dans un dispositif (1) de fabrication de coeurs (33) à partir d'une masse de confiserie contenant des matières grasses,
le dispositif (1) comportant un dispositif de mise en forme (20) refroidi destiné à la formation des coeurs (33), le dispositif de mise en forme (20) comportant deux cylindres de mise en forme (23, 24) entraînés en sens inverse dotés d'une multiplicité de creux (25) dans lesquels la masse de confiserie liquide peut s'écouler pour la constitution des coeurs (33) et s'y solidifier en créant une forme,
le dispositif de refroidissement (5) étant disposé en amont du dispositif de mise en forme (20).

14. Utilisation du dispositif de refroidissement (5) selon la revendication 13, **caractérisée en ce que** le dispositif (1) est constitué selon au moins l'une des revendications 1 à 7 et/ou est destiné à la réalisation du procédé selon au moins l'une des revendications 8 à 12.
